(19) Europäisches Patentamt
European Patent Office
Office européen des brevets

(11) EP 3 905 808 A1

(12) **EUROPEAN PATENT APPLICATION**
published in accordance with Art. 153(4) EPC

(43) Date of publication:
**03.11.2021 Bulletin 2021/44**

(21) Application number: **19903031.3**

(22) Date of filing: **30.12.2019**

(51) Int Cl.:
***H04W 72/04*** *(2009.01)* ***H04L 1/00*** *(2006.01)*

(86) International application number:
**PCT/CN2019/129753**

(87) International publication number:
**WO 2020/135852 (02.07.2020 Gazette 2020/27)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.12.2018 CN 201811648087**

(71) Applicant: **ZTE Corporation**
**Shenzhen, Guangdong 518057 (CN)**

(72) Inventor: **ZHANG, Juan**
**Shenzhen, Guangdong 518057 (CN)**

(74) Representative: **Canzler & Bergmeier Patentanwälte Partnerschaft mbB**
**Friedrich-Ebert-Straße 84**
**85055 Ingolstadt (DE)**

# (54) RESOURCE SCHEDULING PROCESSING METHOD AND APPARATUS

(57) Provided in the present disclosure are a resource scheduling processing method and apparatus. The method comprises: a base station fills in a DAI field in downlink control information DCI of each carrier according to a pre-configured DAI field filling rule, and sends the DAI field filled in according to the pre-configured DAI field filling rule by means of the DCI to a UE; on the basis of the resource allocation state and/or a resource allocation request of a secondary carrier, the base station implements resource allocation for all of the carriers and implements resource scheduling for all of the carriers; after resource scheduling is complete, on the basis of the resource scheduling results and the DAI field filled in according to the pre-configured DAI field filling rule, the base station determines a DAI field corresponding to the actual scheduled resources and determines a HARQ-ACK bit number; and the base station receives resource scheduling feedback sent by the UE and, on the basis of the DAI field corresponding to the actual scheduled resources and the resource scheduling feedback, performs processing on the HARQ-ACK bit number.

A base station fills in a DAI field in downlink control information DCI of each of carriers according to a pre-configured DAI field filling rule and sending the DAI field filled in according to the pre-configured DAI field filling rule to a User Equipment UE through the DCI — S102

The base station allocates resources for all the carriers on the basis of a resource allocation state and/or a resource allocation request of a secondary carrier, and performing resource scheduling on all the carriers — S104

After the resource scheduling is completed, the base station determines a DAI field corresponding to a resource actually scheduled and determines the number of HARQ-ACK bits on the basis of a resource scheduling result and the DAI field filled in according to the pre-configured DAI field filling rule — S106

The base station receives a resource scheduling feedback sent from the UE, and processes the number of HARQ-ACK bits according to the DAI field corresponding to the resource actually scheduled and the resource scheduling feedback — S108

FIG. 1

EP 3 905 808 A1

## Description

### TECHNICAL FIELD

Embodiments of the disclosure relate to but not limited to the field of communication, and in particular, to a method and an apparatus of scheduling and processing resources.

### BACKGROUND

In Long Term Evolution (LTE) and 5G NR systems, after receiving downlink data sent from a network device, a terminal device needs to send a hybrid automatic repeat request-acknowledgement (HARQ-ACK) message to the network device. If the downlink data is received correctly, the terminal device returns an Acknowledgement (ACK), and if the downlink data is received incorrectly, the terminal device feeds back a Negative Acknowledgement (NACK). The network device executes subsequent operations according to the received HARQ-ACK message, for example, judgment of whether to retransmit downlink data. The HARQ-ACK message can be carried on a Physical Uplink Control Channel (PUCCH) or a Physical Uplink Shared Channel (PUSCH).

To fulfill requirements of a peak rate of a single user and an increase of system capacity, one of the most direct ways is to increase the transmission bandwidth of the system. Therefore, the LTE-Advanced system has introduced a technology of increasing a transmission bandwidth, i.e., CA (Carrier Aggregation). The CA technology can aggregate 2 to 5 LTE Component Carriers (CCs) to realize a maximum transmission bandwidth of 100MHz, thereby effectively improving uplink and downlink transmission rates, as shown in FIG. 12-1. The terminal determines that at most a plurality of carriers can be simultaneously used for uplink and downlink transmission according to the capacity of the terminal. In LTE-A, a maximum of 32 carriers can be provided. The carrier aggregation techniques are also supported in 5G NR. Due to asymmetry of uplink and downlink services, the number of supported downlink carriers is generally greater than that of uplink carriers, and only 2 uplink carriers are allowed to transmit a PUCCH in LTE-A and NR. As a result, HARQ-ACKs of multiple downlink carriers are transmitted on a single uplink PUCCH. The increment of the number of downlink carriers may cause increment of the number of fed-back HARQ-ACK bits and restricted performance of the uplink PUCCH or PUSCH. A Type2 dynamic codebook for HARQ-ACK feedback has been introduced into LTE-A and 5G NR. However, for the CA case, the system thereof is distributed scheduling, in which a scheduler is provided for each carrier and DCI of each carrier is generated independently. Since PDCCHs of the carriers are processed in parallel, there is no way to obtain a scheduling condition of another carrier in real time and thus there is no way to correctly fill in countDAI and totalDAI fields. As a result, in the dynamic codebook, the DAI field cannot be timely delivered to the terminal, the total number of bits fed back by the HARQ-ACK cannot be timely obtained, and therefore, a proper PUCCH format cannot be selected, which may cause an increased scheduling delay and deteriorated user experience. In addition, even though the each carrier feeds back HARQ-ACK on a single PUCCH and scheduled in parallel, consistence of PUCCH resources selected by each carrier cannot be ensured.

### SUMMARY

The embodiments of the disclosure provide a method and an apparatus for resource scheduling processing, so as to at least solve the problems of the increased scheduling delay and deteriorated user experience due to the fact that the DAI field cannot be issued to the terminal in time such that a proper PUCCH format cannot be selected in related art.

According to an embodiment of the present disclosure, there is provided a method for resource scheduling processing, including steps of: filling in, by a base station, a DAI field in downlink control information DCI of each of carriers according to a pre-configured DAI field filling rule and sending the DAI field filled in according to the pre-configured DAI field filling rule to a User Equipment UE through the DCI; allocating, by the base station, resources for all the carriers on the basis of a resource allocation state and/or a resource allocation request of a secondary carrier, and performing resource scheduling on all the carriers; after the resource scheduling is completed, determining, by the base station, a DAI field corresponding to a resource actually scheduled and determining the number of HARQ-ACK bits on the basis of a resource scheduling result and the DAI field filled in according to the pre-configured DAI field filling rule; and receiving, by the base station, a resource scheduling feedback sent from the UE, and processing, according to the DAI field corresponding to the resource actually scheduled and the resource scheduling feedback, the number of HARQ-ACK bits.

In an optional embodiment, the step of allocating, by the base station, resources for all the carriers, on the basis of the resource allocation state of the secondary carrier includes: judging, by the base station, whether a resource is allocated to the secondary carrier; and in response to a negative judgment result, applying for a resource for the secondary carrier through a primary carrier.

In an optional embodiment, the step of allocating, by the base station, resources for all the carriers, on the basis of the resource allocation request of the secondary carrier further includes: under the condition that the base station determines that the secondary carrier applies for the resource, allocating the resource for a designated secondary carrier through the primary carrier and marking the resource to be unavailable within preset time.

In an optional embodiment, the pre-configured DAI field filling rule is determined by the base station by: determining a size of a DAI field to be filled in according to a scheduling time and the number of carriers of the available resources; and filling in the DAI field according to a scheduling period of the available resources and a resource quantity of the available resources in each DAI field.

In an optional embodiment, the DAI field includes at least: a counter DAI field or the total DAI field.

In an optional embodiment, the step of, after the resource scheduling is completed, determining, by the base station, the DAI field corresponding to the resource actually scheduled and determining the number of HARQ-ACK bits on the basis of the resource scheduling result and the DAI field filled in according to the pre-configured DAI field filling rule, includes: determining, by the base station, the number of the HARQ-ACK bits according to the number of scheduling resources in the resource scheduling result and a scheduling period of the scheduling resources.

In an optional embodiment, the step of receiving, by the base station, the resource scheduling feedback sent from the UE, and processing, according to the DAI field corresponding to the resource actually scheduled and the resource scheduling feedback, the number of HARQ-ACK bits, includes: judging, by the base station, whether resources corresponding to a NACK fed back in the resource scheduling feedback are scheduled in the DAI field corresponding to the resource actually scheduled.

In an optional embodiment, the method further includes: in response to a negative judgment result, judging, by the base station, whether the resources corresponding to the NACK fed back in the resource scheduling feedback have a resource which is continuously not less than the scheduling period of the available resources in the DAI field corresponding to the actually scheduled resources; in response to a positive judgment result, correcting, by the base station, the number of the HARQ-ACK bits according to the resource scheduling feedback; and in response to a negative judgment result, keeping, by the base station, the number of the HARQ-ACK bits unchanged.

In an optional embodiment, the method further includes: in response to the positive judgment result, retransmitting, by the base station, the resources corresponding to NACK fed back in the resource scheduling feedback.

According to another embodiment of the present disclosure, there is provided an apparatus for resource scheduling processing, including: a filling module, configured to fill in a DAI field in downlink control information DCI of each of carriers according to a pre-configured DAI field filling rule and send the DAI field filled in according to the pre-configured DAI field filling rule to a User Equipment UE through the DCI; a scheduling module, configured to allocate resources for all the carriers on the basis of a resource allocation state and/or a resource allocation request of a secondary carrier, and performing resource scheduling on all the carriers; a determining module, configured to determine a DAI field corresponding to a resource actually scheduled and determine the number of HARQ-ACK bits on the basis of a resource scheduling result and the DAI field filled in according to the pre-configured DAI field filling rule after the resource scheduling is completed; and a processing module, configured to receive a resource scheduling feedback sent from the UE, and process the number of HARQ-ACK bits according to the DAI field corresponding to the resource actually scheduled and the resource scheduling feedback.

According to yet another embodiment of the present disclosure, there is also provided a storage medium having a computer program stored therein, wherein the computer program is configured to perform the steps in the method for resource scheduling processing according to any one of the above embodiments when executed.

According to yet another embodiment of the present disclosure, there is also provided an electronic apparatus, including a memory and a processor, the memory storing therein a computer program, and the processor being configured to execute the computer program to perform the steps in the method for resource scheduling processing according to any one of the method embodiments as described above.

## BRIEF DESCRIPTION OF THE DRAWINGS

The accompanying drawings are included to provide a further understanding of the disclosure and are incorporated in and constitute a part of this disclosure. The exemplary embodiments of the disclosure together with the description serve to explain, not to limit, the disclosure. In the drawings:

FIG. 1 is a flow chart illustrating a method of resource scheduling processing according to an embodiment of the present disclosure;

FIG. 2 is a schematic diagram of a filling manner of a DAI field according to an embodiment of the present disclosure;

FIG. 3 is a schematic diagram of a DAI field corresponding to a resource actually scheduled according to an embodiment of the disclosure;

FIG. 4 is a schematic diagram of another DAI field corresponding to a resource actually scheduled according to an embodiment of the present disclosure; and

FIG. 5 is a block diagram illustrating an apparatus of resource scheduling processing according to an embodiment of the present disclosure.

## DETAILED DESCRIPTION

The present disclosure will be described in detail hereinafter with reference to the accompanying drawings in conjunction with embodiments. It should be noted that, in the present disclosure, the embodiments and features of the embodiments may be combined with each other if there is no conflict.

It should be noted that the terms "first", "second" and the like in the description and claims of the present disclosure and in the accompanying drawings are used for distinguishing between similar elements and not necessarily for describing a particular sequential or chronological order.

First Embodiment

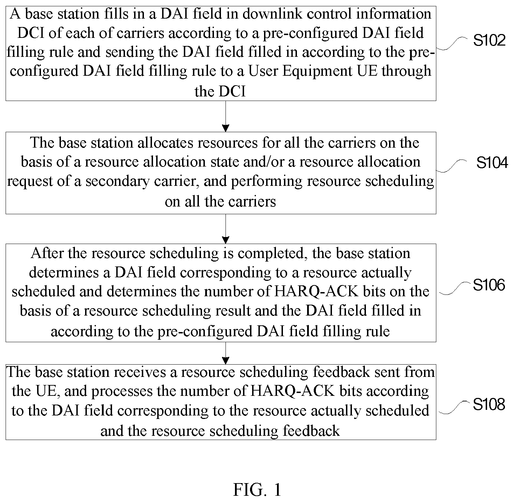

In this embodiment, there is provided a method for resource scheduling processing. FIG. 1 is a flow chart illustrating the method of resource scheduling processing according to the embodiment of the present disclosure, and as shown in FIG. 1, the method of resource scheduling processing includes steps of:

Step S102, filling in, by a base station, a DAI field in downlink control information DCI of each of carriers according to a pre-configured DAI field filling rule and sending the DAI field filled in according to the pre-configured DAI field filling rule to User Equipment UE through the DCI;

Step S104, allocating, by the base station, resources for all the carriers on the basis of a resource allocation state and/or a resource allocation request of a secondary carrier, and performing resource scheduling on all the carriers;

Step S106, after the resource scheduling is completed, determining, by the base station, a DAI field corresponding to a resource actually scheduled and determining the number of HARQ-ACK bits on the basis of a resource scheduling result and the DAI field filled in according to the pre-configured DAI field filling rule; and

Step S108, receiving, by the base station, a resource scheduling feedback sent from the UE, and processing, according to the DAI field corresponding to the resource actually scheduled and the resource scheduling feedback, the number of HARQ-ACK bits.

In an optional embodiment, the step of allocating, by the base station, resources for all the carriers, on the basis of the resource allocation state of the secondary carrier includes: judging, by the base station, whether a resource is allocated to the secondary carrier; and in response to a negative judgment result, applying for a resource for the secondary carrier through a primary carrier.

In an optional embodiment, the step of allocating, by the base station, resources for all the carriers, on the basis of the resource allocation request of the secondary carrier further includes: under the condition that the base station determines that the secondary carrier applies for the resource, allocating the resource for a designated secondary carrier through the primary carrier and marking the resource to be unavailable within preset time.

It should be noted that, if the secondary carrier applies for resources, the process needs to be completed before the base station allocates resources according to the resource allocation state of the secondary carrier.

In an optional embodiment, the preconfigured DAI field filling rule is determined by the base station by: determining a size of a DAI field to be filled in according to a scheduling time and the number of carriers of the available resources; filling in the DAI field according to the scheduling period of the available resources and a resource quantity of the available resources in each DAI field.

According to this embodiment, the problems of the increased scheduling delay and deteriorated user experience due to the fact that the DAI field cannot be issued to the terminal in time such that a proper PUCCH format cannot be selected can be solved. In such a manner that the DAI field of the DCI is filled-in in a static manner to compensate and correct the number of HARQ-ACK bits, the advantages of the reduced scheduling delay and the improved user experience can be provided.

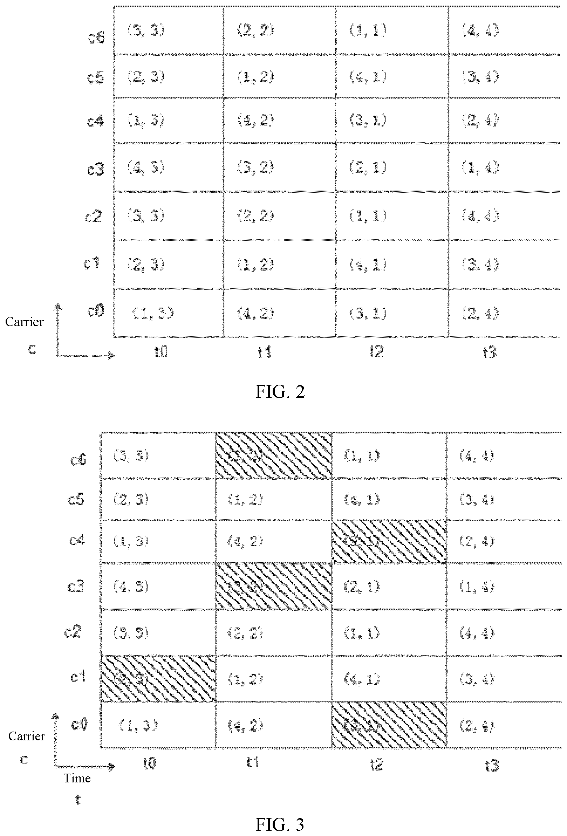

Specifically, FIG. 2 is a schematic diagram of a filling manner of a DAI field according to an embodiment of the present disclosure. As shown in FIG. 2, in the scheduling time (time t) of each resource and each carrier (c), the DAI field is first filled in a full scheduling manner, where it is assumed all resources are available in the process of scheduling.

It should be noted that the resources in this embodiment include, but are not limited to, Physical Uplink Shared Channel (PDSCH) resources, and any other resources capable of implementing the steps in this embodiment are also within the scope of this embodiment, which are not described in detail herein.

Specifically, each DAI field is filled in with scheduled $V_{C-DAI}^{DL}$ and $V_{T-DAI}^{DL}$, where $V_{C-DAI}^{DL}$ represents that the number of PDSCHs up to the scheduled PDSCH; and $V_{T-DAI}^{DL}$ represents total parameter values of scheduled PDSCHs until current scheduling time.

For a scenario of Carrier Aggregation, multiple downlink carriers are fed back in an uplink carrier. For a base station, every time 4 PDSCH resources are scheduled, a DAI is reverted to 1, such that the base station considers that a 4-PDSCH-cycle is scheduled. Therefore, in the same term, every time 4 carriers schedule the resources, reversion is needed to count from the new one. Therefore, in FIG. 2, $V_{C-DAI}^{DL}$ may cyclically number as a period with every 4 PUSCH resources.

Further, $V_{T-DAI}^{DL}$ is calculated by Table 1 as follows:

$$V_{T-DAI}^{DL} = (\text{Y-1}) \bmod 4 + 1$$

where Y represents a total number of the scheduled PDSCH resources until that time.

As shown in FIG. 2, an initial variable j = 0 is set, and j = j + 1 when DAI is reverted from large to small; $V_s = \emptyset$.

Therefore, at time t0, 7 PDSCHs are scheduled, and hence $V_{T-DAI,t}^{DL}$ in ($V_{C-DAI,c,t}^{DL}$, $V_{T-DAI,t}^{DL}$) is 3. The numbering thereof is 1, 2, 3, and 4 in an order of scheduling. Reversion from large to small occurs for 1 time, and j =1.

At time t1, the total number of scheduled PDSCHs is 14 until that time, and hence, at time t1, $V_{T-DAI,t}^{DL}$ in ($V_{C-DAI,c,t}^{DL}$, $V_{T-DAI,t}^{DL}$) is 2. The numbering of $V_{C-DAI,c,t}^{DL}$ is 1, 2, 3, and 4 in the order of scheduling. Reversion from large to small occurs for 3 times, and j =3.

At time t2, the total number of scheduled PDSCHs is 21 until that time, and hence, at time t2, $V_{T-DAI,t}^{DL}$ in ($V_{C-DAI,c,t}^{DL}$, $V_{T-DAI,t}^{DL}$) is 1. The numbering of $V_{C-DAI,c,t}^{DL}$ is 1, 2, 3, and 4 in the order of scheduling. Reversion from large to small occurs for 5 times, and j = 5.

At time t3, the total number of scheduled PDSCHs is 28 until that time, and hence, at time t3, $V_{T-DAI,t}^{DL}$ in ($V_{C-DAI,c,t}^{DL}$, $V_{T-DAI,t}^{DL}$) is 4. The numbering of $V_{C-DAI,c,t}^{DL}$ is 1, 2, 3, and 4 in the order of scheduling. Reversion from large to small occurs for 7 times, and j = 7.

In an optional embodiment, the DAI field includes at least: a counter DAI field, or, a total DAI field.

In an optional embodiment, the step of, after the resource scheduling is completed, determining, by the base station, the DAI field corresponding to the resource actually scheduled and determining the number of HARQ-ACK bits on the basis of the resource scheduling result and the DAI field filled in according to the pre-configured DAI field filling rule, includes: counting, by the base station, resources successfully scheduled in the resource scheduling result as ACK; counting and marking, by the base station, resources unsuccessfully scheduled in the resource scheduling result as NACK; and determining the number of the HARQ-ACK bits according to a counting result.

Specifically, the number of HARQ-ACK bits $O^{ACK}$ is calculated by the following formula:

$$O^{ACK} = 4 * j + V_{T-DAI,c,t}^{DL}$$

where j represents the number of reversions of scheduling in the resources actually scheduled, which can be determined by the number of resources actually scheduled and the period of resources actually scheduled.

FIG. 3 is a schematic diagram of a DAI field corresponding to a resource actually scheduled according to an embodiment of the disclosure. As shown in FIG. 3, in the actual scheduling, the 2nd resource, the 11th resource, the 14th resource, the 15th resource, and the 19th resource are not scheduled. Therefore, the base station needs to mark the resources in these DAI fields (hatched in FIG. 3). Therefore, the number of HARQ-ACK bits $O^{ACK}$ is 28.

In an optional embodiment, the step of receiving, by the base station, the resource scheduling feedback sent from the UE, and processing, according to the DAI field corresponding to the resource actually scheduled and the resource scheduling feedback, the number of HARQ-ACK bits, includes: judging, by the base station, whether resources corresponding to NACK fed back in the resource scheduling feedback are scheduled in the DAI field corresponding to the resource actually scheduled.

In an optional embodiment, in response to a positive judgment result, the base station retransmits the resources corresponding to NACK fed back in the resource scheduling feedback.

Specifically, after the resource scheduling is completed, the UE side also receives the resource scheduling result. However, from the view of UE, there is no difference between the non-scheduled resource and the resource scheduled but lost. Therefore, if a resource is the resource scheduled but lost, the base station will re-upload the resource after determining the resource scheduling feedback in order to meet the resource usage requirement of the UE.

In an optional embodiment, in response to a negative judgment result, the base station judges whether resources corresponding to NACK fed back in the resource scheduling feedback have a resource that is continuously not smaller than the scheduling period of the available resources in the DAI field corresponding to the resources actually scheduled; in response to a positive judgment result, the base station corrects the number of the HARQ-ACK bits according to the resource scheduling feedback; and in response to a negative judgment result, the base station keeps the number of the HARQ-ACK bits unchanged.

As is the feedback condition shown in FIG. 3, in the resource scheduling feedback fed back from the UE, the base station receives the 5 resources returning NACK. Meanwhile, the reason for feeding back NACK is caused by non-scheduling after confirmed by the DAI field corresponding to the resources actually scheduled. As such, the UE and the base station keep consistent in the number of HARQ-ACK bits, both of which have 28 bits. Thus, the number of HARQ-ACK bits does not need to be modified.

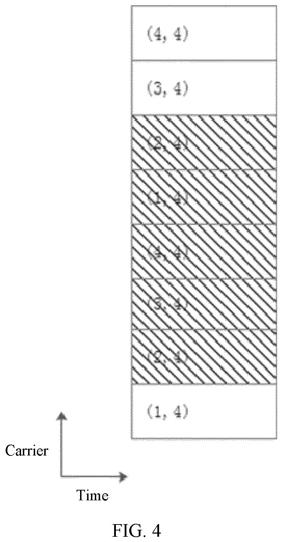

In addition, FIG. 4 is a schematic diagram of another DAI field corresponding to a resource actually scheduled according to an embodiment of the present disclosure. As shown in FIG. 4, a non-scheduling condition greater than the scheduling period of 4 occurs. Since the UE cannot know occurrence of reversion, the base station may only lose the 1st PUSCH resource at this time from the view of UE. To the contrary, from the view of the base station side, there are actually 5 unscheduled resources. Therefore, the number of HARQ-ACK bits from the view of base station is 8 which is calculated by formula $O^{ACK}$. However, in order to reduce the scheduling delay, the base station modifies the number of HARQ-ACK bits of the base station according to the fact that there is no reversion in the resource scheduling feedback at the UE side. That is, the number of the HARQ-ACK bits is calculated to be 4 according to the formula, which is subjected to modification.

In addition, the following scenario is also provided in this embodiment for understanding:

Scenario 1:

Step 201: a CMAC at a base station side first determines that a UE is configured with a CA mode.
Step 202: according to the number of configured carriers, a counter and a total DAI are filled in according to a preset rule no matter a plurality of PDSCHs are scheduled according to the method of the disclosure.
Step 203: as long as a certain secondary carrier needs to schedule and apply for a PUCCH resource, since the number of feedback bits may exceed 22 bits, PUCCH format3 or PUCCH format4/5 needs to be allocated simultaneously with the same index value.
Step 204: the primary carrier allocates PUCCH resources and informs all the secondary carriers of allocated PUCCH index values.
Step 205: the primary and secondary carriers normally schedule the UE, assuming the scheduling condition is as shown in FIG. 3.

On the non-scheduled (t, c) PDSCH, the UE does not consider the base station as not scheduled, but considers the base station as not scheduled; according to the figure, j =6, and $O^{ACK} = 4 * j + V_{T-DAI}^{DL} = 28\ \text{bits}$. At the moment of non-scheduling, the UE feeds back the HARQ-ACK as NACK.

Step 206: the primary carrier collects the scheduling condition of the secondary carrier, and determines the number of the HARQ-ACK bits to be 28 bits according to the scheduling condition which is consistent with the understanding of the UE. For the NACK parsed at the time of non-scheduling, the base station knows that NACK is caused by non-scheduling and does not retransmit NACK.

Step 207: the primary carrier scheduler informs a PUCCH demodulation module of 28 bits of the HARQ-ACK and the index value of the PUCCH format 4/5.

Scenario 2:

For LTE FDD 8 Carrier Aggregation, it is assumed that each carrier schedules a single TB and feeds back 1 bit.

Step 101: CMAC at a base station side first determines that a UE is configured with a CA mode.
Step 102: according to the number of configured carriers, the next uplink PUCCH of the FDD corresponds to a downlink PDCCH detection time, and according to the method of the disclosure, the counter and the total DAI are filled in according to a preset rule no matter a plurality of PDSCHs are scheduled.
Step 103: as long as a certain secondary carrier needs to schedule and apply for a PUCCH resource, since there are 8 carriers and each carrier only reads one TB, the maximum number of feedback bits is 8 bits. Thus, resources of PUCCH format 3 are always applied for.
Step 104: the primary carrier allocates PUCCH resources and informs all the secondary carriers.
Step 105: the primary and secondary carriers normally schedule the UE, assuming the scheduling condition is as shown in FIG. 4.
Step 106: the primary carrier collects the scheduling condition of the secondary carrier, and the number of HARQ-ACK bits is determined according to the scheduling condition.

At the scheduling moment, the counter DAI is not reverted, j =0, and thus $O^{ACK} = 4 * j + V_{T-DAI}^{DL} = 4$; and the UE considers that the downlink PDSCH of $V_{C-DAI,c,t}^{DL} = 2$ is lost and feeds back a NACK. The base station parses the NACK, knows this is the NACK caused by non-scheduling, and thus does not retransmit.

Step 107: in order to ensure the base station and the UE have the same number of HARQ-ACK bits, the primary carrier scheduler informs the PUCCH and the allocated PUCCH resource index value demodulation module of 4 bits of the HARQ-ACK.

Scenario 3:

For NR TDD + FDD Carrier Aggregation, the TDD is used as a primary carrier, and the 4 FDD secondary carriers are used as secondary carriers. The feedback timing is shown in FIG. 9. In the figure, only the feedback timing diagram of the secondary carrier 1 on the primary carrier is shown, and the feedback of other secondary carriers is the same as that of the secondary carrier 1. As can be seen from the figure, a PUCCH of TDD corresponds to feedback of 4 PDSCHs of the TDD primary carrier. There are 4 secondary carriers, and each secondary carrier has feedback of 5 PDSCHs. The number of HARQ-ACK bits may be 4 to 24 bits. It is assumed that a format, for example PUCCH format A, is selected when the number of HARQ-ACK feedback bits is 3-8 bits, and another format, for example PUCCH format B, is selected when the number of HARQ-ACK feedback bits is larger than 8 bits.

Step 301: the secondary carrier SCC1 needs scheduling at the time t0, and it is determined that there is no PUCCH resource available for HARQ-ACK feedback.

Step 302: the secondary carrier sends a resource application request to the primary carrier.

Step 303: the possible HARQ-ACK bits may be carried at different PUCCH formats for transmission due to uncertainty about the scheduling of other secondary carriers. The primary carrier selects resources which are not occupied by other UEs from the PUCCH format A and the PUCCH format B to allocate to the designated UE, and the PUCCH format A and the PUCCH format B have the same resource index value.

Step 304: the primary carrier sends the allocated PUCCH format A and PUCCH format B resources to other secondary carriers of the UE.

Step 305: after receiving the allocated PUCCH resources, other secondary carriers utilize the resources for subsequent scheduling.

Through the description of the above embodiments, it is apparent to those skilled in the art that the method according to the above embodiments may be implemented by software plus a necessary general hardware platform, and certainly may also be implemented by hardware, but the former is a preferred implementation mode in many cases. Based on this understanding, the technical solution of the present disclosure essentially or the part that contributes to the existing technology can be embodied in the form of a software product. The computer software product is stored in a storage medium (such as ROM/RAM, magnetic disk, and optical disc) including several instructions to enable a terminal device (which can be a mobile phone, a computer, a server, or a network device, for example) to execute the methods according to the embodiments of the disclosure.

Second Embodiment

In this embodiment, there is further provided an apparatus for resource scheduling processing, which can be used to implement the above embodiments and preferred implementations, details of which have been already described and will be omitted herein. As used below, the term "module" can be a combination of software and/or hardware that implements a predetermined function. Although the apparatus described in the embodiments below are preferably implemented in form of software, an implementation in form of hardware or a combination of software and hardware is also contemplated and possible.

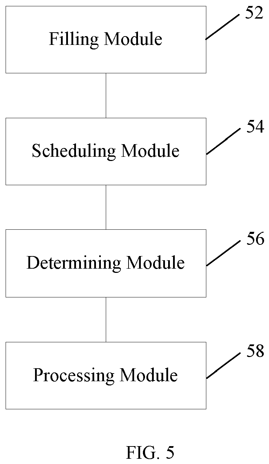

FIG. 5 is a block diagram illustrating an apparatus of resource scheduling processing according to an embodiment of the present disclosure. As shown in FIG. 5, the apparatus includes:

a filling module 52, configured to fill in a DAI field in downlink control information DCI of each of carriers according to a pre-configured DAI field filling rule and send the DAI field filled in according to the pre-configured DAI field filling rule to User Equipment UE through the DCI;
a scheduling module 54, configured to allocate resources for all the carriers on the basis of a resource allocation state and/or a resource allocation request of a secondary carrier, and performing resource scheduling on all the carriers;
a determining module 56, configured to determine a DAI field corresponding to a resource actually scheduled and determine the number of HARQ-ACK bits on the basis of a resource scheduling result and the DAI field filled in according to the pre-configured DAI field filling rule after the resource scheduling is completed; and
a processing module 58, configured to receive a resource scheduling feedback sent from the UE, and process, according to the DAI field corresponding to the resource actually scheduled and the resource scheduling feedback, the number of HARQ-ACK bits.

It should be noted that the above modules can be implemented by software or hardware, and for the latter, the modules can be implemented in the following manner, but are not limited thereto. The modules are all positioned in one processor;
alternatively, the modules are distributed in different processors in any combination.

According to this embodiment, the problems of the increased scheduling delay and deteriorated user experience due to the fact that the DAI field cannot be issued to the terminal in time such that a proper PUCCH format cannot be selected can be solved. In such a manner that the DAI field of the DCI is filled-in in a static manner to compensate and correct the number of HARQ-ACK bits, the advantages of the reduced scheduling delay and the improved user experience can be provided.

Third Embodiment

In an embodiment of the present disclosure, there is also provided a storage medium having a computer program stored therein, wherein the computer program is configured to perform the steps in any of the method embodiments described above when executed.

Optionally, in this embodiment, the storage medium can be configured to store a computer program for executing steps of:

S1, filling in, by a base station, a DAI field in downlink control information DCI of each of carriers according to a pre-configured DAI field filling rule;
S2, allocating, by the base station, resources for all the carriers on the basis of a resource allocation state and/or a resource allocation request of a secondary carrier, and performing resource scheduling on all the carriers;
S3, after the resource scheduling is completed, determining, by the base station, a DAI field corresponding to a resource actually scheduled and determining the number of HARQ-ACK bits on the basis of a resource scheduling result and the DAI field filled in according to the pre-configured DAI field filling rule; and
S4, receiving, by the base station, a resource scheduling feedback sent from the UE, and processing, according to the DAI field corresponding to the resource actually scheduled and the resource scheduling feedback, the number of HARQ-ACK bits.

Optionally, in this embodiment, the storage medium can include but is not limited to various media capable of storing computer programs, such as a USB disk, a Read-Only Memory (ROM), a Random-Access Memory (RAM), a removable hard disk, a magnetic disk, or an optical disk.

In an embodiment of the present disclosure, there is also provided an electronic apparatus, including a memory having a computer program stored therein and a processor configured to execute the computer program to perform the steps in any of the method embodiments described above.

In an optional embodiment, the electronic apparatus can further include a transmission device and an input/output device, wherein the transmission device is connected to the processor, and the input/output device is connected to the processor.

Optionally, in this embodiment, the processor can be configured to execute the following steps by a computer program:

S1, filling in, by a base station, a DAI field in downlink control information DCI of each of carriers according to a pre-configured DAI field filling rule;
S2, allocating, by the base station, resources for all the carriers on the basis of a resource allocation state and/or a resource allocation request of a secondary carrier, and performing resource scheduling on all the carriers;
S3, after the resource scheduling is completed, determining, by the base station, a DAI field corresponding to a resource actually scheduled and determining the number of HARQ-ACK bits on the basis of a resource scheduling result and the DAI field filled in according to the pre-configured DAI field filling rule; and
S4, receiving, by the base station, a resource scheduling feedback sent from the UE, and processing, according to the DAI field corresponding to the resource actually scheduled and the resource scheduling feedback, the number of HARQ-ACK bits.

Optionally, for specific examples in this embodiment, reference can be made to the examples described in the above embodiments and optional implementations, and description of which will be omitted herein.

It will be apparent to those skilled in the art that the modules or steps of the present disclosure as set forth above can be implemented by a general-purpose computing device, which can be provided on a single computing device or distributed across a network of multiple computing devices. Alternatively, they can be implemented by program code executable by a computing device, such that they can be stored in a memory device and executed by a computing device. In some cases, the steps shown or described can be executed out of order, or separately as individual integrated circuit modules, or multiple modules; or steps thereof may be implemented as a single integrated circuit module. Thus, the present disclosure is not limited to any specific combination of hardware and software.

The above description is only the preferred embodiments of the present disclosure and is not intended to limit the present disclosure. Various modifications and changes can be made to the disclosure by those skilled in the art. Any modification, equivalent substitution, and improvement made within the principle of the disclosure should fall into the scope of the disclosure.

## Claims

1. A method for resource scheduling processing, comprising steps of:

   filling in, by a base station, a DAI field in downlink control information DCI of each of carriers according to a pre-configured DAI field filling rule and sending the DAI field filled in according to the pre-configured DAI field filling rule to a User Equipment UE through the DCI;
   allocating, by the base station, resources for all the carriers on the basis of a resource allocation state and/or a resource allocation request of a secondary carrier, and performing resource scheduling on all the carriers;
   after the resource scheduling is completed, determining, by the base station, a DAI field corresponding to a resource actually scheduled and determining the number of HARQ-ACK bits on the basis of a resource scheduling result and the DAI field filled in according to the pre-configured DAI field filling rule; and
   receiving, by the base station, a resource scheduling feedback sent from the UE, and processing, according to the DAI field corresponding to the resource actually scheduled and the resource scheduling feedback, the number of HARQ-ACK bits.

2. The method according to claim 1, wherein the step of allocating, by the base station, resources for all the carriers, on the basis of the resource allocation state of the secondary carrier comprises:

   judging, by the base station, whether a resource is allocated to the secondary carrier; and
   in response to a negative judgment result, applying for a resource for the secondary carrier through a primary carrier.

3. The method according to claim 1 or 2, wherein the step of allocating, by the base station, resources for all the carriers, on the basis of the resource allocation request of the secondary carrier further comprises: under the condition that the base station determines that the secondary carrier applies for the resource, allocating the resource for a designated secondary carrier through the primary carrier and marking the resource to be unavailable within preset time.

4. The method according to claim 1, wherein the pre-configured DAI field filling rule is determined by the base station by:

   determining a size of a DAI field to be filled in according to a scheduling time and the number of carriers of the available resources; and
   filling in the DAI field according to a scheduling period of the available resources and a resource quantity of the available resources in each DAI field.

5. The method according to claim 1, wherein the DAI field comprises at least:
   a counter DAI field or a total DAI field.

6. The method according to claim 1, wherein the step of, after the resource scheduling is completed, determining, by the base station, the DAI field corresponding to the resource actually scheduled and determining the number of HARQ-ACK bits on the basis of the resource scheduling result and the DAI field filled in according to the pre-configured DAI field filling rule, comprises:
   determining, by the base station, the number of the HARQ-ACK bits according to the number of scheduling resources in the resource scheduling result and a scheduling period of the scheduling resources.

7. The method according to claim 6, wherein the step of receiving, by the base station, the resource scheduling feedback sent from the UE, and processing, according to the DAI field corresponding to the resource actually scheduled and the resource scheduling feedback, the number of HARQ-ACK bits, comprises:
   judging, by the base station, whether resources corresponding to a NACK fed back in the resource scheduling feedback are scheduled in the DAI field corresponding to the resource actually scheduled.

8. The method according to claim 7, further comprising:

   in response to a negative judgment result, judging, by the base station, whether the resources corresponding to the NACK fed back in the resource scheduling feedback have a resource which is continuously not less than the scheduling period of the available resources in the DAI field corresponding to the actually scheduled resources;
   in response to a positive judgment result, correcting, by the base station, the number of the HARQ-ACK bits according to the resource scheduling feedback; and
   in response to a negative judgment result, keeping, by the base station, the number of the HARQ-ACK bits unchanged.

9. The method according to claim 8, further comprising: in response to the positive judgment result, retransmitting, by the base station, the resources corresponding to NACK fed back in the resource scheduling feedback.

**10.** An apparatus for resource scheduling processing, applied to a base station and comprising:

a filling module, configured to fill in a DAI field in downlink control information DCI of each of carriers according to a pre-configured DAI field filling rule and send the DAI field filled in according to the pre-configured DAI field filling rule to a User Equipment UE through the DCI;
a scheduling module, configured to allocate resources for all the carriers on the basis of a resource allocation state and/or a resource allocation request of a secondary carrier, and perform resource scheduling on all the carriers;
a determining module, configured to determine a DAI field corresponding to a resource actually scheduled and determine the number of HARQ-ACK bits on the basis of a resource scheduling result and the DAI field filled in according to the pre-configured DAI field filling rule after the resource scheduling is completed; and
a processing module, configured to receive a resource scheduling feedback sent from the UE, and process the number of HARQ-ACK bits according to the DAI field corresponding to the resource actually scheduled and the resource scheduling feedback.

**11.** A storage medium having a computer program stored thereon, wherein the computer program is configured to, when executed, perform the method according to any one of claims 1 to 9.

**12.** An electronic apparatus comprising a memory having a computer program stored therein and a processor configured to execute the computer program to perform the method according to any one of claims 1 to 9.

A base station fills in a DAI field in downlink control information DCI of each of carriers according to a pre-configured DAI field filling rule and sending the DAI field filled in according to the pre-configured DAI field filling rule to a User Equipment UE through the DCI
S102
The base station allocates resources for all the carriers on the basis of a resource allocation state and/or a resource allocation request of a secondary carrier, and performing resource scheduling on all the carriers
S104
After the resource scheduling is completed, the base station determines a DAI field corresponding to a resource actually scheduled and determines the number of HARQ-ACK bits on the basis of a resource scheduling result and the DAI field filled in according to the pre-configured DAI field filling rule
S106
The base station receives a resource scheduling feedback sent from the UE, and processes the number of HARQ-ACK bits according to the DAI field corresponding to the resource actually scheduled and the resource scheduling feedback
S108

FIG. 1

| Carrier c | t0 | t1 | t2 | t3 |
|---|---|---|---|---|
| c6 | (3, 3) | (2, 2) | (1, 1) | (4, 4) |
| c5 | (2, 3) | (1, 2) | (4, 1) | (3, 4) |
| c4 | (1, 3) | (4, 2) | (3, 1) | (2, 4) |
| c3 | (4, 3) | (3, 2) | (2, 1) | (1, 4) |
| c2 | (3, 3) | (2, 2) | (1, 1) | (4, 4) |
| c1 | (2, 3) | (1, 2) | (4, 1) | (3, 4) |
| c0 | (1, 3) | (4, 2) | (3, 1) | (2, 4) |

FIG. 2

c6
(3, 3)
(2, 2)
(1, 1)
(4, 4)
c5
(2, 3)
(1, 2)
(4, 1)
(3, 4)
c4
(1, 3)
(4, 2)
(3, 1)
(2, 4)
c3
(4, 3)
(3, 2)
(2, 1)
(1, 4)
c2
(3, 3)
(2, 2)
(1, 1)
(4, 4)
c1
(2, 3)
(1, 2)
(4, 1)
(3, 4)
c0
(1, 3)
(4, 2)
(3, 1)
(2, 4)
Carrier
c
Time
t
t0
t1
t2
t3

FIG. 3

(4, 4)
(3, 4)
(2, 4)
(1, 4)
(4, 4)
(3, 4)
(2, 4)
(1, 4)
Carrier
Time

FIG. 4

Filling Module
52
Scheduling Module
54
Determining Module
56
Processing Module
58

FIG. 5

## INTERNATIONAL SEARCH REPORT

International application No.
**PCT/CN2019/129753**

**A. CLASSIFICATION OF SUBJECT MATTER**

H04W 72/04(2009.01)i；H04L 1/00(2006.01)i

According to International Patent Classification (IPC) or to both national classification and IPC

**B. FIELDS SEARCHED**

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

CNPAT; CNKI; WPI; EPODOC; 3GPP: 资源, 调度, 载波, 基站, 下行控制信息, DCI, DAI, 分配, 规则, 填写, 请求, 实际, HARQ, ACK, 比特, 数, 反馈, 周期, 纠正, resource, schedule, carrier, base station, downlink control information, allocation, rule, fill, request, actual, bit, number, feedback, period, correct

**C. DOCUMENTS CONSIDERED TO BE RELEVANT**

| Category* | Citation of document, with indication, where appropriate, of the relevant passages | Relevant to claim No. |
|---|---|---|
| A | CN 106301670 A (ZTE CORPORATION) 04 January 2017 (2017-01-04) claims 1-8, and description, paragraphs [0391]-[0405] | 1-12 |
| A | CN 102075313 A (CHINA ACADEMY OF TELECOMMUNICATIONS TECHNOLOGY) 25 May 2011 (2011-05-25) entire document | 1-12 |
| A | US 2018115404 A1 (NAM, Jungkil) 26 April 2018 (2018-04-26) entire document | 1-12 |
| A | WO 2012020954 A1 (SAMSUNG ELECTRONICS CO., LTD.) 16 February 2012 (2012-02-16) entire document | 1-12 |
| A | NTT DOCOMO, INC. "R1-155691: Dynamic HARQ-ACK Feedback Adaptation for CA Enhancements" *3GPP TSG RAN WG1 Meeting #82bis,* 09 October 2015 (2015-10-09), entire document | 1-12 |

☑ Further documents are listed in the continuation of Box C. ☑ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **17 March 2020** | **26 March 2020** |
| Name and mailing address of the ISA/CN<br>**China National Intellectual Property Administration (ISA/CN)**<br>**No. 6, Xitucheng Road, Jimenqiao Haidian District, Beijing 100088**<br>**China** | Authorized officer |
| Facsimile No. **(86-10)62019451** | Telephone No. |

Form PCT/ISA/210 (second sheet) (January 2015)

**INTERNATIONAL SEARCH REPORT**

International application No.
**PCT/CN2019/129753**

**C. DOCUMENTS CONSIDERED TO BE RELEVANT**

| Category* | Citation of document, with indication, where appropriate, of the relevant passages | Relevant to claim No. |
|---|---|---|
| A | PANASONIC. "R1-1720498: HARQ-ACK Codebook for CBG-based Transmission" *3GPP TSG RAN WG1 Meeting 91,* 01 December 2017 (2017-12-01), entire document | 1-12 |

Form PCT/ISA/210 (second sheet) (January 2015)

**INTERNATIONAL SEARCH REPORT**
**Information on patent family members**

International application No.
**PCT/CN2019/129753**

| Patent document cited in search report | | | Publication date (day/month/year) | Patent family member(s) | | | Publication date (day/month/year) |
|---|---|---|---|---|---|---|---|
| CN | 106301670 | A | 04 January 2017 | WO | 2016184211 | A1 | 24 November 2016 |
| | | | | EP | 3297193 | A1 | 21 March 2018 |
| | | | | US | 2018145796 | A1 | 24 May 2018 |
| CN | 102075313 | A | 25 May 2011 | None | | | |
| US | 2018115404 | A1 | 26 April 2018 | KR | 20150090587 | A | 06 August 2015 |
| | | | | US | 2019036669 | A1 | 31 January 2019 |
| | | | | US | 2015215079 | A1 | 30 July 2015 |
| | | | | WO | 2015115818 | A1 | 06 August 2015 |
| WO | 2012020954 | A1 | 16 February 2012 | US | 2016065349 | A1 | 03 March 2016 |
| | | | | US | 2012034927 | A1 | 09 February 2012 |
| | | | | EP | 2418901 | A2 | 15 February 2012 |
| | | | | US | 2015003382 | A1 | 01 January 2015 |
| | | | | EP | 3267751 | A2 | 10 January 2018 |

Form PCT/ISA/210 (patent family annex) (January 2015)